# EUROPEAN PATENT SPECIFICATION

(11) **EP 0 476 833 B1**
(45) Date of publication and mention of the grant of the patent: **03.05.1995**
(21) Application number: 91307548.7
(22) Date of filing: 15.08.1991
(51) Int. Cl.: B60G 13/00

(54) **Knuckle bracket**
Befestigungsbügel
Bande de fixation

(30) Priority: 15.08.1990 JP 86055/90; 31.10.1990 JP 114202/90
(43) Date of publication of application: 25.03.1992
(60) Divisional application: 94201792.2
(73) Proprietor: Kayaba Kogyo Kabushiki Kaisha, Minato-ku, Tokyo 105 (JP)
(72) Inventor: Ohta, Akihisa, Kani-si, Gifu (JP)
(74) Representative: Price, Paul Anthony King

(56) References cited:
- DE-A- 3 932 329
- DE-U- 8 517 424
- FR-A- 2 463 016
- FR-A- 2 558 230
- GB-A- 2 093 157
- US-A- 3 941 401
- PATENT ABSTRACTS OF JAPAN, vo. 7, no. 157 (M-227)(1302) 9 July 1983 & JP-A-58 063 506 (NISSAN JIDOSHA) 15 April 1983
- PATENT ABSTRACTS OF JAPAN, vol. 6, no. 45 (M-118)(923) 20 March 1982 & JP-A-56 160 442 (TOKICO) 10 December 1981

## Description

The present invention relates to a knuckle bracket for use in mounting a strut type shock absorber which is disposed between a vehicle body and a wheel in order to support the vehicle body and absorb energy such as vibration from the road surface.

A strut type shock absorber comprises an outer shell and a shock absorber inserted into the outer shell. A lower portion of the outer shell is connected to a wheel of a vehicle while being supported by a knuckle bracket.

Known knuckle brackets of this type are disclosed in Japanese Utility Model Publication No. 13790/86, U.S. Patent No. 4,491,339 and Japanese Patent Laid Open No. 160442/81, and the structure shown in Fig. 7 attached hereto is a typical prior art structure.

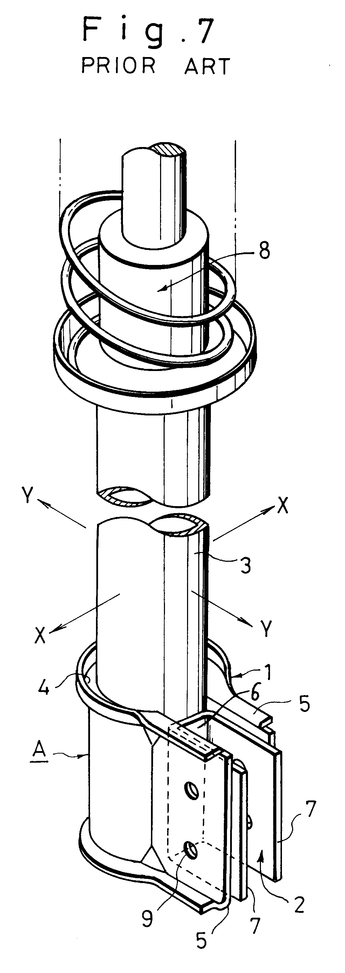

The knuckle bracket illustrated in Fig. 7 and indicated at A comprises an outer bracket 1 and an inner bracket 2. The outer bracket 1 comprises a loop portion 4 which extends around an outer shell 3 and a pair of clamp portions 5, 5 extending in parallel from the loop portion 4. The inner bracket 2 comprises a curved backrest portion 6 which is in abutment with the outer shell 3 and a pair of support pieces 7, 7 extending in parallel from the backrest portion 6.

A lower portion of the outer shell 3 with a shock absorber 8 inserted therein is located within the loop portion 4 of the outer bracket 1, and the support pieces 7, 7 of the inner bracket 2 are clamped by the clamp portions 5, 5 of the outer bracket 1 while the backrest portion 6 of the inner bracket 2 is kept in abutment with the outer shell 3. The clamp portions 5 and the support pieces 7 are clamped together with bolts inserted into bolt holes 9.

However, when a shock input from the road surface is large, a bending load acting in a lateral direction X-X or a longitudinal direction Y-Y in Fig. 7 is imposed on the outer shell 3 or the knuckle bracket A. In the case of a lateral load, the clamp portions 5, 5 and the support pieces 7, 7 of the knuckle bracket A may become opened and deformed; as a result, there is possibility that the knuckle bracket A will tilt or come of the outer shell 3.

DE-U-8 517 424 (corresponding to the preamble of claim 1) proposes modifying the above-described known knuckle bracket by incorporating an outwardly-bent extension to the top of the backrest portion. The support pieces are extended upwards to meet the sides of the backrest extension.

According to the present invention as defined in claim 1, there is provided a knuckle bracket for mounting on a cylindrical item such as a shock absorber, said knuckle bracket comprising: an outer bracket having a loop portion, for receiving therein the cylindrical item, and a pair of clamp portions extending substantially in parallel from said loop portion; an inner bracket having a curved backrest portion and a pair of support pieces extending substantially in parallel from said backrest portion, said support pieces being inserted between and clampable to said clamp portions of said outer bracket and said backrest portion being abutable against the cylindrical item; and a reinforcing bracket which is provided at a first end of said inner bracket and comprises a first portion which (i) extends at least across the gap between said support pieces and (ii) acts as a reinforcement to resist splaying apart of said support pieces; characterized in that said reinforcing bracket further comprises a second portion which (i) extends away from said first end of said inner bracket and said first portion and (ii) is abutable against the cylindrical item.

According to another aspect of the invention, there is provided an assembly comprising said knuckle bracket and a shock absorber as defined in claim 4; additional features of that assembly are disclosed in dependent claims 5 and 6.

The knuckle bracket of the present invention is capable of bearing lateral and longitudinal loads imposed on the shock absorber. This prevents opening and deformation of the clamp portions and support pieces and tilting of the knuckle bracket.

Possible reinforcing brackets include: a hollow triangular prism comprising a bent plate and having horizontal, vertical and inclined portions; and a hollow triangular or square pipe.

When a longitudinal load is applied to the shock absorber, the front and rear outer peripheral portions of the shock absorber are supported by the loop portion of the outer bracket, the backrest portion of the inner bracket and the second portion of the reinforcing bracket. When a lateral load is applied to the shock absorber, the loop portion of the outer bracket supports the outer peripheral side faces of the shock absorber. At this time, the support pieces of the inner bracket are prevented from being opened in the lateral direction by means of the first portion of the reinforcing bracket.

The invention will now be described by way of non-limiting embodiments with reference to the accompany drawings, in which:-
Fig. 1 is a perspective view of a knuckle bracket according to an embodiment of the present invention;
Fig. 2 is a plan view thereof;
Figs. 3 and 4 are perspective views of a knuckle bracket according to another embodiment of the present invention;
Fig. 5 is a perspective view of a knuckle bracket according to a still further embodiment of the present invention;
Fig. 6 is a perspective view of a knuckle bracket according to a still further embodiment of the present invention; and
Fig. 7 is a perspective view of a conventional knuckle bracket.

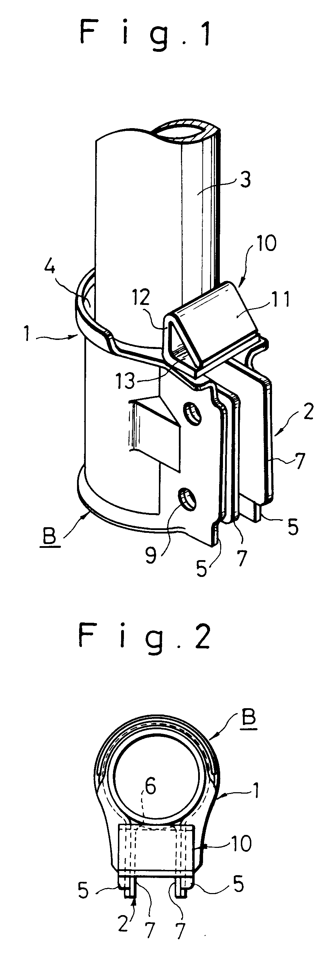

Figs. 1 and 2 illustrate an embodiment of the present invention. The basic construction of a knuckle bracket B according to this embodiment is the same as in the prior art illustrated in Fig. 7. The knuckle bracket B comprises an outer bracket 1 and an inner bracket 2. The outer bracket 1 comprises a loop portion 4 serving as a socket for receiving a cylindrical member and a pair of clamp portions 5, 5 extending in parallel from the loop portion 4, while the inner bracket 2 comprises a curved backrest portion 6 and a pair of support pieces 7, 7 extending in parallel from the backrest portion 6.

Into the loop portion 4 of the outer bracket 1 is inserted a lower portion of an outer shell 3 of a strut type shock absorber, and the backrest 6 of the inner bracket 2 is in abutment with the front-facing outer periphery of the outer shell 3.

The clamp portions 5, 5 of the outer bracket 1 and the support pieces 7, 7 of the inner bracket 2 interposed between the clamp portions are clamped together with bolts inserted into bolt holes 9.

A reinforcing bracket 10 is formed in the shape of a hollow triangular prism consisting of a horizontal portion 13, a vertical portion 12 and an inclined portion 11 by bending a plate. The lower surface of the horizontal portion 13 is mounted across the upper ends of the clamp portions 5, 5 and the support pieces 7, 7 and welded thereto, while the back of the vertical portion 12 is brought into abutment with the outer surface of the outer shell 3 and is welded thereto if necessary.

Since the reinforcing bracket 10 reinforces the two clamp portions 5, 5 and also the two support pieces 7, 7, even when a lateral load is imposed on the outer shell 3, the clamp portions 5, 5 and the support pieces 7, 7 are prevented from being opened, in cooperation with the bolts. Further, when a longitudinal load is applied to the outer shell 3, since the outer shell is supported not only by the loop portion 4 and the backrest portion 6 but also by the vertical portion 12, its tilting is prevented and a bending moment induced in the outer shell 3 is reduced.

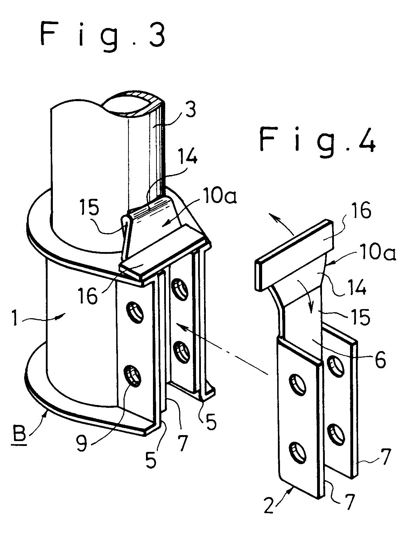

Referring now to Figs. 3 and 4, there is illustrated a knuckle bracket according to another embodiment of the present invention, in which a reinforcing bracket 10a is formed integrally with an inner bracket 2.

The basic form of an outer bracket 1 and an inner bracket 2 are the same as in the embodiment shown in Fig. 1. A plate is provided integrally with an upper end of a backrest portion 6 of the inner bracket 2 and it is bent to form a horizontal portion 16, a vertical portion 15 and an inclined portion 14. The horizontal portion 16 is mounted across the upper ends of clamp portions 5, 5 and support pieces 7, 7 and is welded thereto, while the back of the vertical portion 15 is brought into abutment with the outer surface of the outer shell 3. In cooperation with tightening of bolts, the horizontal portion 16 reinforces the clamp portions 5, 5 and the support pieces 7, 7 to prevent opening thereof.

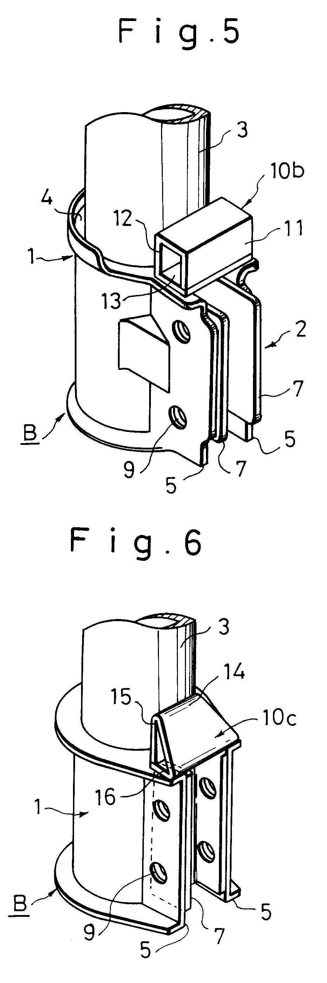

Referring now to Fig. 5 there is illustrated a knuckle bracket according to a still further embodiment of the present invention, in which, in place of the reinforcing bracket 10 shown in Fig. 1, a reinforcing bracket 10b constituted by a hollow square pipe is welded to upper surfaces of clamp portions 5, 5 of an outer bracket 1 and also to upper ends of an inner bracket 2. Instead of a square pipe, there may be used a triangular or polygonal pipe, or there may be used a solid polygonal pole.

Referring now to Fig. 6, there is illustrated a knuckle bracket according to a still further embodiment of the present invention, in which there is used a reinforcing bracket which is a modification of the reinforcing bracket 10a shown in Fig. 3. This reinforcing bracket, indicated at 10c, is formed in the shape of a hollow triangle comprising a vertical portion 15, an inclined portion 14 and an inwardly bent horizontal portion 16. The function and effect are the same as in the embodiment shown in Fig. 3.

The following effects are attained by the present invention.
① Since a reinforcing bracket is mounted at least between a pair of support pieces of an inner bracket, even when a lateral load is imposed on the support pieces from, for example, a shock absorber passing through the bracket, the reinforcing bracket bears the load and prevents the support pieces from being opened, whereby deformation, tilting and disengagement of the knuckle bracket are prevented.
② Because the reinforcing bracket has a vertical portion which comes into abutment with an outer surface of the shock absorber, it is possible to cope with a longitudinal load from the shock absorber.
(3) Since the basic form of an outer bracket and an inner bracket are the same as in the prior art and what is required is the mere addition thereto of a reinforcing bracket of simple structure, the invention is easy and cheap to implement.
(4) In the prior art, resistance against deformation can be increased by increasing the wall thickness of the inner and outer brackets and the outer shell, but by using the reinforcing bracket of the present invention it is not necessary to increase the wall thickness of the inner and outer brackets and outer shell, and thus it is possible to attain a reduction in weight. Alternatively, with the present invention, the provision of a reinforcing bracket permits a decrease in wall thickness of the prior art outer shell and inner and outer brackets, whereby a reduction in weight can be attained.

## Claims

1. A knuckle bracket (B) for mounting on a cylindrical item such as a shock absorber (3), said knuckle bracket (B) comprising:-
an outer bracket (1) having a loop portion (4), for receiving therein the cylindrical item (3), and a pair of clamp portions (5) extending substantially in parallel from said loop portion (4);
an inner bracket (2) having a curved backrest portion (6) and a pair of support pieces (7) extending substantially in parallel from said backrest portion (6), said support pieces (7) being inserted between and clampable to said clamp portions (5) of said outer bracket (1) and said backrest portion (6) being abutable against the cylindrical item (3); and
a reinforcing bracket (10, 10a, 10b, 10c) which is provided at a first end of said inner bracket (2) and comprises a first portion (13, 16) which (i) extends at least across the gap between said support pieces (7) and (ii) acts as a reinforcement to resist splaying apart of said support pieces (7);
characterized in that said reinforcing bracket (10, 10a, 10b, 10c) further comprises a second portion (12, 15) which (i) extends away from said first end of said inner bracket (2) and said first portion (13, 16) and (ii) is abutable against the cylindrical item.

2. A knuckle bracket (B) according to claim 1, wherein said reinforcing bracket (10, 10c) has the shape of a hollow triangular prism whose three sides comprise said first portion (13, 16), said second portion (12, 15) and a third portion (11, 14), said first portion (13, 16) being welded to end surfaces of said clamp portions (5) of said outer bracket (1) and also to end surfaces of said support pieces (7) of said inner bracket (2).

3. A knuckle bracket (B) according to claim 1, wherein said reinforcing bracket (10b) comprises a hollow square pipe welded to end surfaces of said clamp portions (5) and also to end surfaces of said support pieces (7).

4. An assembly comprising a knuckle bracket (B) according to claim 1 and a shock absorber (3), wherein said shock absorber (3) is disposed in said loop portion (4) and said backrest portion (6) and said second portion (12, 15) abut against said shock absorber (3).

5. An assembly according to claim 4, wherein said first portion (13, 16) is welded to end surfaces of said clamp portions (5) and also to end surfaces of said support pieces (7).

6. An assembly according to claim 4 or 5, wherein said second portion (12, 15) is welded to said shock absorber (3).

## Patentansprüche

1. Befestigungsbügel (B) zur Befestigung auf einem zylindrischen Gegenstand, wie einem Schalldämpfer (3), wobei dieser Befestigungsbügel (B)
einen Außenbügel (1) mit einem Schleifenabschnitt (4) zur Aufnahme des zylindrischen Gegenstandes (3) darin und einem Paar von Klemmabschnitten (5), die sich im wesentlichen parallel zu dem Schleifenabschnitt (4) erstrecken,
einen Innenbügel (2) mit einem gebogenen oder gekrümmten Anlageabschnitt (6) und einem Paar von Stützteilen (7), die sich im wesentlichen parallel zu dem Anlageabschnitt (6) erstrecken, wobei die Stützteile (7) zwischen den Klemmabschnitten (5) des Außenbügels (1) eingefügt und an sie klemmbar sind und der Anlageabschnitt (6) gegen den zylindrischen Gegenstand (3) anlegbar ist, und
einen Verstärkungsbügel (10, 10a, 10b, 10c), welcher an einem ersten Ende des Innenbügels (12) vorgesehen ist und einen ersten Abschnitt (13, 16) umfaßt, welcher (i) sich wenigstens über den Spalt zwischen den Stützteilen (7) erstreckt und (ii) als eine Verstärkung wirkt, um einem Auseinanderdehnen der Stützteile (7) zu widerstehen, umfaßt,
**dadurch gekennzeichnet**, daß der Verstärkungsbügel (10, 10a, 10b, 10c) weiterhin einen zweiten Abschnitt (12, 15) umfaßt, welcher (i) sich von dem ersten Ende des Innenbügels (2) und dem ersten Abschnitt (13, 16) weg erstreckt und (ii) gegen den zylindrischen Gegenstand anlegbar ist.

2. Befestigungsbügel (B) nach Anspruch 1, bei dem der Verstärkungsbügel (10, 10c) die Form eines hohen dreieckigen Prismas hat, dessen drei Seiten den ersten Abschnitt (13, 16), den zweiten Abschnitt (12, 15) und einen dritten Abschnitt (11, 14) umfassen, wobei der erste Abschnitt (13, 16) mit Endoberflächen der Klemmabschnitte (5) des Außenbügels (1) und auch mit Endoberflächen der Stützteile (7) des Innenbüges (2) verschweißt ist.

3. Befestigungsbügel (B) nach Anspruch 1, bei dem der Verstärkungsbügel (10b) ein hohes rechteckiges Rohr umfaßt, welches mit Endoberflächen der Klemmabschnitte (5) und auch mit Endoberflächen der Stützteile (7) verschweißt ist.

4. Anordnung mit einem Befestigungsbügel (B) nach Anspruch 1 und einem Schalldämpfer (3), bei der der Schalldämpfer (3) in dem Schleifenabschnitt (4) angeordnet ist und der Anlageabschnitt (6) und der zweite Abschnitt (12, 15) gegen den Schalldämpfer (3) anliegen.

5. Anordnung nach Anspruch 4, bei der der erste Abschnitt (13, 16) mit Endoberflächen der Klemmabschnitte (5) und auch mit Endoberflächen der Stützteile (7) verschweißt ist.

6. Anordnung nach Anspruch 4 oder 5, bei der der zweite Abschnitt (12, 15) mit dem Schalldämpfer (3) verschweißt ist.

## Revendications

1. Support articulé (B) à monter sur un article cylindrique tel qu'un amortisseur (3), ledit support articulé (B) comprenant :
un support externe (1) possédant une portion en boucle (4) dans laquelle vient se loger l'article cylindrique (3), et une paire de portions de serrage (5) s'étendant essentiellement parallèlement à ladite portion de boucle (4);
un support interne (2) possédant une portion dorsale pliée ou courbe (6) et une paire de pièces de support (7) s'étendant essentiellement parallèlement à ladite portion dorsale (6), lesdites pièces de support (7) étant insérées entre lesdites portions de serrage (5) dudit support externe (1) et étant aptes à y être serrées, et ladite portion dorsale (6) pouvant venir se disposer bout à bout contre l'article cylindrique (3); et
un support de renforcement (10, 10a, 10b, 10c) qui est prévu à une première extrémité dudit support interne (2) et qui comprend une première portion (13, 16) qui (i) s'étend au moins à travers l'espace libre ménagé entre lesdites pièces de support (7), et (ii) fait office de renforcement pour résister à la séparation par évasement desdites pièces de support (7);
caractérisé en ce que ledit support de renforcement (10, 10a, 10b, 10c) comprend, en outre, une seconde portion (12, 15) qui (i) s'étend à l'écart de ladite première extrémité dudit support interne (2) et de ladite première portion (13, 16), et (ii) peut venir se disposer bout à bout contre l'article cylindrique.

2. Support articulé (B) selon la revendication 1, dans lequel ledit support de renforcement (10, 10c) a la forme d'un prisme triangulaire creux dont les trois côtés comprennent ladite première portion (13, 16), ladite deuxième portion (12, 15) et une troisième portion (11, 14), ladite première portion (13, 16) étant soudée à des surfaces terminales desdites portions de serrage (5) dudit support externe (1) et également aux surfaces terminales desdites pièces de support (7) dudit support interne (2).

3. Support articulé (B) selon la revendication 1, dans lequel ledit support de renforcement (10b) comprend un tuyau carré creux soudé aux surfaces terminales desdites portions de serrage (5) et également aux surfaces terminales desdites pièces de support (7).

4. Assemblage comprenant un support articulé (B) selon la revendication 1 et un amortisseur (3), dans lequel ledit amortisseur (3) est disposé dans ladite portion de boucle (4), et ladite portion dorsale (6) et ladite deuxième portion (12, 15) viennent buter contre ledit amortisseur (3).

5. Assemblage selon la revendication 4, dans lequel ladite première portion (13, 16) est soudée à des surfaces terminales desdites portions de serrage (5) et également aux surfaces terminales desdites pièces de support (7).

6. Assemblage selon la revendication 4 ou 5, dans lequel ladite deuxième portion (12, 15) est soudée audit amortisseur (3).
